(19) **Europäisches Patentamt / European Patent Office / Office européen des brevets**

(11) **EP 4 598 180 A1**

(12) **EUROPEAN PATENT APPLICATION**
published in accordance with Art. 153(4) EPC

(43) Date of publication:
06.08.2025  Bulletin 2025/32

(21) Application number: 23869672.8

(22) Date of filing: 26.05.2023

(51) International Patent Classification (IPC):
*H04W 72/04* (2023.01)

(52) Cooperative Patent Classification (CPC):
H04W 72/04; H04W 72/23; H04W 72/54;
H04W 76/28

(86) International application number:
PCT/CN2023/096644

(87) International publication number:
WO 2024/066419 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022  CN 202211216025

(71) Applicant: Datang Mobile Communications
Equipment Co., Ltd.
Beijing 100085 (CN)

(72) Inventors:
• LUO, Chen
Beijing 100085 (CN)
• CHENG, Fangchen
Beijing 100085 (CN)
• WANG, Jiaqing
Beijing 100085 (CN)
• YANG, Meiying
Beijing 100085 (CN)
• LI, Yaomin
Beijing 100085 (CN)

(74) Representative: Ipsilon
11 rue Saint-Georges
75009 Paris (FR)

(54) **SERVICE TRANSMISSION METHOD AND APPARATUS**

(57) The present disclosure provides a service transmission method and apparatus. The method comprises: a terminal device determining a first transmission window corresponding to a first service; and the terminal device receiving first information within the first transmission window, wherein the first information comprises a data packet of the first service and/or a data packet for instructing the terminal device to receive the first service. The service transmission method and apparatus provided in the present disclosure are used for solving the problem of how to receive a data packet, so as to prevent a data packet received by a terminal device from having a delay jitter.

FIG. 3

- 301: Determining a first transmission window corresponding to a first service
- 302: Receiving first information in the first transmission window, where the first information includes a data packet of the first service and/or a data packet for indicating the terminal device to receive the first service

**Description**

CROSS-REFERENCES TO RELATED APPLICATIONS

The present application claims priority to Chinese patent application No. 202211216025.6 filed on September 30, 2022, entitled "Service Transmission Method and Apparatus", which is hereby incorporated by reference in its entirety.

FIELD

The present application relates to the field of communications, and in particular, to methods and apparatuses for service transmission.

BACKGROUND

For a specific service, such as extended reality (XR), a data source may generate a data packet, and the data packet may be sent to a terminal device through a base station.
In the related art, for the specific service, there is generally a delay jitter when the base station receives the data packet. Therefore, in a procedure of the base station sending the data packet to the terminal device, there is also a delay jitter when the terminal device receives the data packet.
In order to avoid the delay jitter in the data packet received by the terminal device, how the terminal device receives the data packet is a problem that needs to be solved urgently.

BRIEF SUMMARY

The present application provides methods and apparatuses for service transmission to solve a problem in the related art that needs to be solved urgently of how a terminal device receives a data packet, thereby avoiding a delay jitter in the data packet received by the terminal device.
An embodiment of the present application provides a method for service transmission, performed by a terminal device, including:

determining a first transmission window corresponding to a first service; and

receiving first information in the first transmission window, where the first information includes a data packet of the first service and/or a data packet for indicating the terminal device to receive the first service.

In any of the embodiments of the present application, the first transmission window is one or more of the following:

a time period where a target transmission resource is located, where the target transmission resource is a transmission resource configured for the first service;

a monitor window for downlink control information (DCI), where the DCI is used to schedule the first service; or

a receiving window for a signaling or a channel carrying a service transmission indication.

In any of the embodiments of the present application, the method further includes:

receiving window adjustment indication information; and

determining a second transmission window based on the first transmission window and the window adjustment indication information, or based on the window adjustment indication information, and receiving the first information within the second transmission window.

In any of the embodiments of the present application, in case of determining the second transmission window based on the window adjustment indication information, the window adjustment indication information includes one or more of the following:

window associated information of the second transmission window; or

an index of window associated information of the second transmission window.

In any of the embodiments of the present application, in case of determining the second transmission window based on the first transmission window and the window adjustment indication information, the window adjustment indication information includes one or more of the following:

an adjustment step of window associated information of the first transmission window; or

an adjustment indication of window associated information of the first transmission window, where the adjustment indication is used to indicate to adjust associate information of the first transmission window, or to indicate to open or close of the first transmission window.

In any of the embodiments of the present application, a signaling carrying the window adjustment indication information is any one of the following:

a physical layer signaling; or

a medium access control (MAC) layer signaling.

In any of the embodiments of the present application, the method further includes:
obtaining a target value of service transmission associated information, where the service transmission associated information is transmission associated information of the first service.
In any of the embodiments of the present application, the method further includes:

determining target window associated information based on the target value; and

determining a second transmission window based on the target window associated information.

In any of the embodiments of the present application, the service transmission associated information includes first service transmission associated information and/or second service transmission associated information, and obtaining the target value of the service transmission associated information includes:

receiving a target value of the first service transmission associated information sent from a network device, where the target value of the first service transmission associated information is the target value of the service transmission associated information; or

obtaining the target value of the service transmission associated information based on the second service transmission associated information.

In any of the embodiments of the present application, the method further includes:
sending the target value of the service transmission associated information obtained based on the second service transmission associated information to a network device, where the target value is used for the network device to determine window adjustment indication information.
In any of the embodiments of the present application, the first service transmission associated information and/or the second service transmission associated information includes one or more of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

In any of the embodiments of the present application, the window associated information and/or the target window associated information includes one or more of the following:

a start position of window;

an end position of window;

a window size;

a window period and a window offset;

a window period;

a window offset;

a number of windows in a window period;

a number of windows within a specific time; or

a number of windows.

In any of the embodiments of the present application, the target value includes any one of the following:

a statistical value corresponding to a target statistical time window; or

a statistical value corresponding to a target sliding time window.

An embodiment of the present application provides a method for service transmission, performed by a network device, including:
sending first information to a terminal device, where the first information includes a data packet of the first service and/or a data packet for indicating the terminal device to receive the first service.

In any of the embodiments of the present application, the method further includes:

sending window adjustment indication information to the terminal device, where the window adjustment indication information is used to indicate the terminal device to determine a second transmission window and receive the first information within the second transmission window.

In any of the embodiments of the present application, the method further includes:

obtaining a target value of service transmission associated information, where the service transmission associated information is transmission associated information of the first service.

In any of the embodiments of the present application, the service transmission associated information includes first service transmission associated information and/or second service transmission associated information, and obtaining the target value of the service transmission associated information includes:

obtaining a target value of the first service transmission associated information based on the first service transmission associated information, where the target value of the first service transmission associated information is the target value of the service transmission associated information; or

receiving the target value of the service transmission associated information obtained based on the second service transmission associated information sent from the terminal device.

In any of the embodiments of the present application, the method further includes:

sending the target value of the first service transmission associated information to the terminal device.

In any of the embodiments of the present application, the target value is obtained based on any one of the following ways:

a processing way pre-configured by a protocol; or

a processing way corresponding to the first service.

In any of the embodiments of the present application, the target value includes any one of the following:

a statistical value corresponding to a target statistical time window; or

a statistical value corresponding to a target sliding time window.

In any of the embodiments of the present application, the target statistical time window, associated information of the target statistical time window, and the target sliding time window are obtained based on one or more of the following ways:

pre-configured by a protocol; or

indicated by the terminal device.

In any of the embodiments of the present application, the first service transmission associated information and/or the second service transmission associated information includes at least one of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,
where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

An embodiment of the present application provides a terminal device, including a memory, a transceiver and a processor,
where the memory is used for storing a computer program, the transceiver is used for receiving and sending data under control of the processor, and the processor is used for reading the computer program in the memory and performing the following operations:

determining a first transmission window corresponding to a first service; and
receiving first information in the first transmission window, where the first information includes a data packet of the first service and/or a data packet for indicating the terminal device to receive the first service.

In any of the embodiments of the present application, the first transmission window is one or more of the following:

a time period where a target transmission resource is located, where the target transmission resource is a transmission resource configured for the first service;

a monitor window for downlink control information (DCI), where the DCI is used to schedule the first service; or

a receiving window for a signaling or a channel carrying a service transmission indication.

In any of the embodiments of the present application, the processor is further used for:

receiving window adjustment indication information; and
determining a second transmission window based on the first transmission window and the window adjustment indication information, or based on the window adjustment indication information, and receiving the first information within the second transmission window.

In any of the embodiments of the present application, in case of determining the second transmission window based on the window adjustment indication information, the window adjustment indication information includes one or more of the following:

window associated information of the second transmission window; or

an index of window associated information of the second transmission window.

In any of the embodiments of the present application, in case of determining the second transmission window based on the first transmission window and the window adjustment indication information, the window adjustment indication information includes one or more of the following:

an adjustment step of window associated information of the first transmission window; or

an adjustment indication of window associated information of the first transmission window, where the adjustment indication is used to indicate to adjust associate information of the first transmission window, or to indicate to open or close of the first transmission window.

In any of the embodiments of the present application, a signaling carrying the window adjustment indication information is any one of the following:

a physical layer signaling; or

a medium access control (MAC) layer signaling.

In any of the embodiments of the present application, the processor is further used for:
obtaining a target value of service transmission associated information, where the service transmission associated information is transmission associated information of the first service.
In any of the embodiments of the present application, the processor is further used for:

determining target window associated information based on the target value; and
determining a second transmission window based on the target window associated information.

In any of the embodiments of the present application, the service transmission associated information includes first service transmission associated information and/or second service transmission associated information, and the processor is used for:

receiving a target value of the first service transmission associated information sent from a network device, where the target value of the first service transmission associated information is the target value of the service transmission associated information; or

obtaining the target value of the service transmission associated information based on the second service transmission associated information.

In any of the embodiments of the present application, the processor is used for:
sending the target value of the service transmission associated information obtained based on the second service transmission associated information to a network device, where the target value is used for the network device to determine window adjustment indication information.
In any of the embodiments of the present application, the first service transmission associated information and/or the second service transmission associated information includes one or more of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

In any of the embodiments of the present application, the window associated information and/or the target window associated information includes one or more of the following:

a start position of window;

an end position of window;

a window size;

a window period and a window offset;

a window period;

a window offset;

a number of windows in a window period;

a number of windows within a specific time; or

a number of windows.

In any of the embodiments of the present application, the target value includes any one of the following:

a statistical value corresponding to a target statistical time window; or

a statistical value corresponding to a target sliding time window.

An embodiment of the present application provides a network device, including a memory, a transceiver and a processor,

where the memory is used for storing a computer program, the transceiver is used for receiving and sending data under control of the processor, and the processor is used for reading the computer program in the memory and performing the following operations:

sending first information to a terminal device, where the first information includes a data packet of the first service and/or a data packet for indicating the terminal device to receive the first service.

In any of the embodiments of the present application, the processor is further used for:
sending window adjustment indication information to the terminal device, where the window adjustment indication information is used to indicate the terminal device to determine a second transmission window and receive the first information within the second transmission window.

In any of the embodiments of the present application, the processor is further used for:
obtaining a target value of service transmission associated information, where the service transmission associated information is transmission associated information of the first service.

In any of the embodiments of the present application, the service transmission associated information includes first service transmission associated information and/or second service transmission associated information, and the processor is used for:

obtaining a target value of the first service transmission associated information based on the first service transmission associated information, where the target value of the first service transmission associated information is the target value of the service transmission associated information; or
receiving the target value of the service transmission associated information obtained based on the second service transmission associated information sent from the terminal device.

In any of the embodiments of the present application, the processor is further used for:
sending the target value of the first service transmission associated information to the terminal device.

In any of the embodiments of the present application, the target value is obtained based on any one of the following ways:

a processing way pre-configured by a protocol; or

a processing way corresponding to the first service.

In any of the embodiments of the present application, the target value includes any one of the following:

a statistical value corresponding to a target statistical time window; or

a statistical value corresponding to a target sliding time window.

In any of the embodiments of the present application, the target statistical time window, associated information of the target statistical time window, and the target sliding time window are obtained based on one or more of the following ways:

pre-configured by a protocol; or

indicated by the terminal device.

In any of the embodiments of the present application, the first service transmission associated information and/or the second service transmission associated information includes at least one of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

An embodiment of the present application provides an apparatus for service transmission, including:

a determining module, used for determining a first transmission window corresponding to a first service; and
a receiving module, used for receiving first information in the first transmission window, where the first information includes a data packet of the first service and/or a data packet for indicating a terminal device to receive the first service.

In any of the embodiments of the present application, the first transmission window is one or more of the following:

a time period where a target transmission resource is located, where the target transmission resource is a transmission resource configured for the first service;

a monitor window for downlink control information (DCI), where the DCI is used to schedule the first service; or

a receiving window for a signaling or a channel carrying a service transmission indication.

In any of the embodiments of the present application, the receiving module is further used for receiving window adjustment indication information; and
the determining module is further used for determining a second transmission window based on the first transmission window and the window adjustment indication information, or based on the window adjustment indication information, and receiving the first information within the second transmission window.

In any of the embodiments of the present application, in case of determining the second transmission window based on the window adjustment indication information, the window adjustment indication information includes one or more of the following:

window associated information of the second transmission window; or

an index of window associated information of the second transmission window.

In any of the embodiments of the present application, in case of determining the second transmission window based on the first transmission window and the window adjustment indication information, the window adjustment indication information includes one or more of the following:

an adjustment step of window associated information of the first transmission window; or
an adjustment indication of window associated information of the first transmission window, where the adjustment indication is used to indicate to adjust associate information of the first transmission window, or to indicate to open or close of the first transmission window.

In any of the embodiments of the present application, a signaling carrying the window adjustment indication information is any one of the following:

a physical layer signaling; or

a medium access control (MAC) layer signaling.

In any of the embodiments of the present application, the apparatus further includes:
an obtaining module, used for obtaining a target value of service transmission associated information, where the service transmission associated information is transmission associated information of the first service.
In any of the embodiments of the present application, the determining module is further used for:

determining target window associated information based on the target value; and

determining a second transmission window based on the target window associated information.

In any of the embodiments of the present application, the service transmission associated information includes first service transmission associated information and/or second service transmission associated information, and the obtaining module is further used for:

receiving a target value of the first service transmission associated information sent from a network device, where the target value of the first service transmission associated information is the target value of the service transmission associated information; or

obtaining the target value of the service transmission associated information based on the second service transmission associated information.

In any of the embodiments of the present application, the apparatus further includes:
a sending module, used for sending the target value of the service transmission associated information obtained based on the second service transmission associated information to a network device, where the target value is used for the network device to determine window adjustment indication information.
In any of the embodiments of the present application, the first service transmission associated information and/or the second service transmission associated information includes one or more of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

In any of the embodiments of the present application, the window associated information and/or the target window associated information includes one or more of the following:

a start position of window;

an end position of window;

a window size;

a window period and a window offset;

a window period;

a window offset;

a number of windows in a window period;

a number of windows within a specific time; or

a number of windows.

In any of the embodiments of the present application, the target value includes any one of the following:

a statistical value corresponding to a target statistical time window; or

a statistical value corresponding to a target sliding time window.

An embodiment of the present application provides an apparatus for service transmission, including:
a sending module, used for sending first information to a terminal device, where the first information includes a data packet of the first service and/or a data packet for indicating the terminal device to receive the first service.

In any of the embodiments of the present application, the sending module is further used for:
sending window adjustment indication information to the terminal device, where the window adjustment indication information is used to indicate the terminal device to determine a second transmission window and receive the first information within the second transmission window.

In any of the embodiments of the present application, the apparatus further includes:
an obtaining module, used for obtaining a target value of service transmission associated information, where the service transmission associated information is transmission associated information of the first service.

In any of the embodiments of the present application, the service transmission associated information includes first service transmission associated information and/or second service transmission associated information, and the obtaining module is further used for:

obtaining a target value of the first service transmission associated information based on the first service transmission associated information, where the target value of the first service transmission associated information is the target value of the service transmission associated information; or

receiving the target value of the service transmission associated information obtained based on the second service transmission associated information sent from the terminal device.

In any of the embodiments of the present application, the sending module is further used for:
sending the target value of the first service transmission associated information to the terminal device.

In any of the embodiments of the present application, the target value is obtained based on any one of the following ways:

a processing way pre-configured by a protocol; or

a processing way corresponding to the first service.

In any of the embodiments of the present application, the target value includes any one of the following:

a statistical value corresponding to a target statistical time window; or

a statistical value corresponding to a target sliding time window.

In any of the embodiments of the present application, the target statistical time window, associated information of the target statistical time window, and the target sliding time window are obtained based on one or more of the following ways:

pre-configured by a protocol; or

indicated by the terminal device.

In any of the embodiments of the present application, the first service transmission associated information and/or the second service transmission associated information includes at least one of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

An embodiment of the present application provides a non-transitory computer readable storage medium storing a computer program, and the computer program is used to cause a processor to perform any of the methods described above.
An embodiment of the present application provides a computer program product including a computer program, and the computer program is used to cause a processor to perform any of the methods described above.
In the methods and apparatuses for service transmission provided by embodiments of the present application, by determining the first transmission window corresponding to the first service, and receiving the first information in the first transmission window, where the first information contains the data packet of the first service and/or the data packet for indicating the terminal device to receive the first service, the problem of the delay jitter in the data packets received by the terminal device is solved.

BRIEF DESCRIPTION OF THE DRAWINGS

In order to illustrate the solutions disclosed in the embodiments of the present application or the related art more clearly, the drawings used in the description of the embodiments or the related art are briefly described below. The drawings in the following description are only some embodiments of the present application, and other drawings may be obtained according to these drawings without any creative work for those skilled in the art.

FIG. 1 is a schematic diagram of a discontinuous reception (DRX) cycle of a DRX mechanism in the related art;

FIG. 2 is a schematic diagram of an application scenario according to an embodiment of the present application;

FIG. 3 is a first schematic flowchart of a method for service transmission according to an embodiment of the present application;

FIG. 4 is a schematic diagram of a position relationship of $T\_arriv, T\_init,$ and $T\_offset$ according to an embodiment of the present application;

FIG. 5 is a second schematic flowchart of a method for service transmission according to an embodiment of the present application;

FIG. 6 is a first schematic flowchart of an interaction between a network device and a terminal device according to an embodiment of the present application;

FIG. 7 is a second schematic flowchart of an interaction between a network device and a terminal device according to an embodiment of the present application;

FIG. 8 is a first schematic structural diagram of an apparatus for service transmission according to an embodiment of the present application;

FIG. 9 is a second schematic structural diagram of an apparatus for service transmission according to an embodiment of the present application;

FIG. 10 is a schematic diagram of an entity structure of a terminal device according to an embodiment of the present application; and

FIG. 11 is a schematic diagram of an entity structure of a network device according to an embodiment of the present application.

DETAILED DESCRIPTION

To make the objective, solutions, and advantages of the present application clearer, the solutions in the present application are clearly and completely described below in conjunction with the accompanying drawings in the present application. The described embodiments are part of the embodiments of the present application, rather than all the embodiments. Based on the embodiments in the present application, all other embodiments obtained by those of ordinary skill in the art without creative work fall within the scope of protection of the present application.

The terms involved in the present application are explained as follows.

Extended reality (XR): a most important type of $5^{th}$ generation (5G) media application, which uses computer technologies and wearable devices to generate a combination of real and virtual environments and related human-computer interactions. XR includes various forms such as augmented reality (AR), mixed reality (MR), and virtual reality (VR), etc. A degree of virtuality from AR to VR increases from weak to strong, that is, from AR where humans perceive inputs through sensors to VR where sensory existence of a virtual human is simulated, the degree of virtuality increases from weak to strong. The XR device presents an "illusion" of human vision, hearing or environment.

According to a research of the $3^{rd}$ generation partnership project (3GPP) organization on an XR service, a transmission characteristic of XR service is approximately periodic, that is, an XR service source generates corresponding data packets at a certain refresh rate. For example, in case that the refresh rate is 60 frames per second (60 FPS), the XR service source generates 60 data frames per second, and a time interval between data frames is 16.67 milliseconds. For example, in case that the refresh rate is 120 frames per second, the XR service source generates 120 data frames per second, and the time interval between data frames is 8.33 milliseconds. Each frame of data packets generated by the XR service source reaches a network device after encoding, network routing and other steps. In the above steps, due to different data packet sizes and network congestion conditions, the data packets have different degrees of delay jitter when they arrive at the network device, and the delay jitter generally has a certain degree of randomness. Therefore, a video stream in a downlink XR service has a quasi-periodic characteristic in transmission time. According to a collection of a video data stream of a downlink VR/computer graphics (CG) service by SA4, the data packet sizes and delay jitters of the video stream with varying transmission rates obey the characteristics of truncated Gaussian distribution.

Discontinuous reception (DRX) mechanism: when a user configures a DRX group, a user equipment (UE) discontinuously monitors a physical downlink control channel (PDCCH) for all service cells.

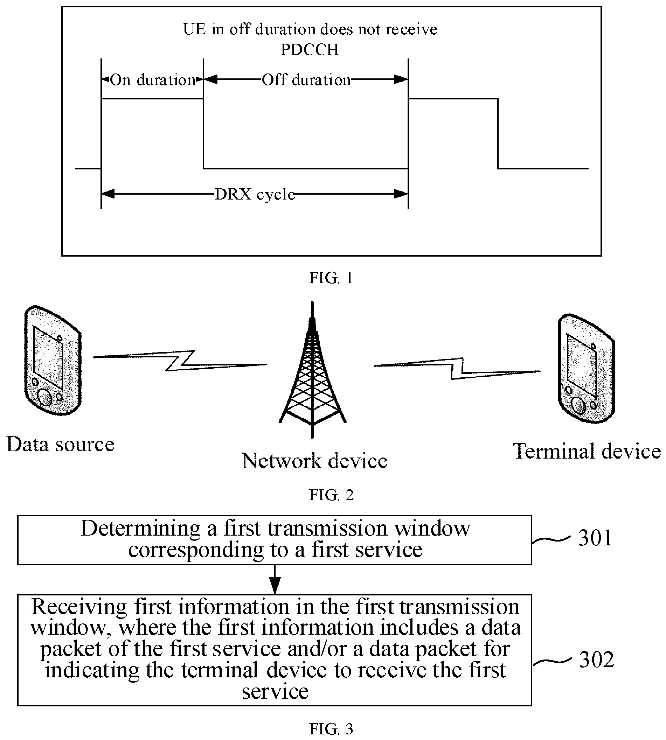

An explanation of the DRX mechanism is given in FIG. 1. FIG. 1 is a schematic diagram of a DRX cycle of a DRX mechanism in the related art. As shown in FIG. 1, in a DRX cycle, a terminal device monitors PDCCH only in an on duration, and in a DRX off duration (i.e., opportunity for DRX), the terminal device does not receive other PDCCHs except for scheduling broadcast signaling to reduce power consumption, i.e., entering a sleep mode.

The on duration may be a time period in which timers such as a DRX on duration timer (*drx-onDurationTimer*), a DRX off timer (*drx-InactivityTimer*), a downlink retransmission timer (*drx-RetransmissionTimerDL*), an uplink retransmission timer (*drx-RetransmissionTimerUL*), a random-access contention resolution timer (*ra-ContentionResolutionTimer*), and a message B response window (*msgB-ResponseWindow*), etc. have not timed out.

In a long DRX group, a start time of the DRX on duration needs to satisfy the following relationship:

$$[(SFN \times 10) + frame\ number]\ modulo\ (drx\text{-}LongCycle) = drx\text{-}StartOffset,$$

where *SFN* represents a system frame number, *modulo* represents a modulus calculation, *drx-LongCycle* is a long DRX cycle (i.e., deep sleep cycle), and *drx-StartOffset* is a time offset value for a start of the DRX on duration.

The DRX mechanism mainly does not monitor a PDCCH scrambled by the following radio network temporary identity (RNTI) during the DRX off duration.

The RNTI may be any of the following:

a cell RNTI (C-RNTI);

a cancellation indication RNTI (CI-RNTI);

a configured scheduling RNTI (CS-RNTI);

an interruption RNTI (INT-RNTI);

a slot format indication RNTI (SFI-RNTI);

a semi-persistent channel state information RNTI (SP-CSI-RNTI);

a transmission control protocol physical uplink control channel RNTI (TPC-PUCCH-RNTI);

a transmission control protocol physical uplink shared channel RNTI (TPC-PUSCH-RNTI);

a transmission control protocol sounding reference signal RNTI (TPC-SRS-RNTI); or

an availability indicator (AI-RNTI).

It should be noted that the C-RNTI is mainly used for DCI scrambling for data scheduling.

In case that the terminal is configured with two DRX groups, except that values of the on duration timer and the off duration timer may be different, other parameters are the same.

An application scenario involved in the present application is exemplarily described below in conjunction with FIG. 2.

FIG. 2 is a schematic diagram of an application scenario according to an embodiment of the present application. As shown in FIG. 2, it includes: a data source of a first service, a network device, and a terminal device.

The data source generates a corresponding data packet at a certain refresh rate and sends the data packet to the network device. After receiving the data packet, the network device sends the data packet to the terminal device. The terminal device may be, for example, the above-mentioned XR device.

In the related art, the data packet received by the base station generally has delay jitter. Therefore, in a procedure of the base station sending the data packet to the terminal device, the data packet received by the terminal device may also have delay jitter.

In order to avoid the delay jitter of the data packet received by the terminal device, the present application provides methods for service transmission to solve a problem of how the terminal device receives the data packet based on an indication of the network device.

The methods for service transmission provided by the present application are described in conjunction with specific embodiments.

FIG. 3 is a first schematic flowchart of a method for service transmission according to an embodiment of the present application. As shown in FIG. 3, the method includes the following steps.

Step 301: determining a first transmission window corresponding to a first service.

In any of the embodiments of the present application, this embodiment may be performed by a terminal device or a communication device provided in the terminal device, and the communication device may be implemented by a combination of software and/or hardware.

In any of the embodiments of the present application, the first service may be a specific service, such as an XR service.

In any of the embodiments of the present application, the first transmission window may be determined based on first indication information sent from a network device. A signaling used to carry the first indication information may be at least one of the following:

a physical layer signaling;

a medium access control (MAC) layer signaling; or

a radio resource control (RRC) signaling.

In any of the embodiments of the present application, the first indication information may include any of the following:

a start position and an end position of the first transmission window;

a start position and a duration of the first transmission window; or

a target index, where the target index indicates the first transmission window.

For example, in case that the first indication information includes the target index, a transmission window corresponding to the target index in the plurality of transmission windows stored in the terminal device may be determined as the first transmission window.

In any of the embodiments of the present application, the network device may semistatically configure the first transmission window for the terminal device.

For example, the network device may configure a periodic first transmission window for the terminal device, or may dynamically indicate the first transmission window to the terminal device through the physical layer signaling and/or the MAC layer signaling.

In any of the embodiments of the present application, in case that the network device periodically configures the first transmission window for the terminal device, for example, it is necessary to configure a period ($T$), an offset value (*Offset*), and a *duration.*

In any of the embodiments of the present application, the first transmission window may be independent of a DRX on duration, or may be a transmission window that completely overlaps with the DRX on duration, or partially overlaps with the DRX on duration, or completely overlaps with the DRX off duration, or partially overlaps with the DRX off duration.

In any of the embodiments of the present application, the network device may also indicate to the terminal device whether to start a transmission window for the first service through a start message. In case that the transmission window for the first service is started, the transmission window is ended by an end message after a period of time. In the method for starting and ending the transmission window, a start position of the first transmission window determined by the terminal device may be a moment of receiving the start message sent from the network device, or an initial moment carried by the start message, and an end position of the first transmission window determined by the terminal device may be a moment of receiving the end message sent from the network device, or an end moment carried by the end message.

In any of the embodiments of the present application, an enabling switch may also be configured through an RRC signaling to indicate whether the terminal has the transmission window for the first service.

In any of the embodiments of the present application, the start message and the end message may be at least one of the following:

a physical layer signaling;

an MAC signaling; or

an RRC signaling.

In any of the embodiments of the present application, in case that a cyclic redundancy check (CRC) code of downlink control information (DCI) for scheduling the first service is scrambled by an RNTI dedicated to the first service, the first transmission window may also be a duration corresponding to a search space set where the DCI for the first service is located.

Step 302: receiving first information in the first transmission window, where the first information includes a data packet of the first service and/or a data packet for indicating the terminal device to receive the first service.

In the method for service transmission provided by the present application, in case that the first information includes the data packet of the first service, the terminal device receives the data packet of the first service within the determined first transmission window, thereby avoiding the problem of delay jitter in the data packet of the first service received by the terminal device. In case that the first information is used to indicate the terminal device to receive the data packet of the first service, the terminal device may receive the data packet of the first service based on the first information, thereby avoiding the problem of delay jitter in the data packet of the first service received by the terminal device.

In addition, unlike the related art, in a traditional discontinuous transmission mechanism (such as a DRX transmission mechanism), no distinction is made between services, that is, all services are discontinuously received simultaneously. For example, the XR service has a quasi-periodic transmission characteristic and has a relatively clear periodicity for a fixed refresh rate. If a DRX transmission is configured based on an XR service period, transmission performances of other services are affected. In the present application, a transmission window dedicated to the first service may be targeted at different service characteristics, and the terminal device receives the first information dedicated to the first service without affecting transmissions of other services.

In any of the embodiments of the present application, the first transmission window is one or more of the following:

a time period where a target transmission resource is located, where the target transmission resource is a transmission resource configured for the first service;

a monitor window for downlink control information (DCI), where the DCI is used to schedule the first service; or

a receiving window for a signaling or a channel carrying a service transmission indication.

In any of the embodiments of the present application, in case that the first transmission window is the above-mentioned monitor window, the first information may be DCI; and in case that the first transmission window is the above-mentioned receiving window, the first information may be a signaling or a channel carrying a service transmission indication.

It should be noted that, in the present application, in order to improve the reliability of the transmission window, the transmission window may also be adjusted. In a procedure of adjusting the transmission window, the method for service transmission provided by the present application further includes:

receiving window adjustment indication information; and

determining a second transmission window based on the first transmission window and the window adjustment indication information, or based on the window adjustment indication information, and receiving the first information within the second transmission window.

In any of the embodiments of the present application, in case of determining the second transmission window based on the window adjustment indication information, the window adjustment indication information includes one or more of the following:

window associated information of the second transmission window; or

an index of window associated information of the second transmission window.

In any of the embodiments of the present application, in case of determining the second transmission window based on the first transmission window and the window adjustment indication information, the window adjustment indication information includes one or more of the following:

an adjustment step of window associated information of the first transmission window; or
an adjustment indication of window associated information of the first transmission window, where the adjustment indication is used to indicate to adjust associate information of the first transmission window, or to indicate to open or close of the first transmission window.

In any of the embodiments of the present application, a signaling carrying the window adjustment indication information is any one of the following:

a physical layer signaling;

a medium access control (MAC) layer signaling; or

an RRC signaling.

In any of the embodiments of the present application, the window associated information includes one or more of the following:

a start position of window;

an end position of window;

a window size;

a window period and a window offset;

a window period;

a window offset;

a number of windows in a window period;

a number of windows within a specific time; or

a number of windows.

In any of the embodiments of the present application, the window adjustment indication information may be N bits, where N being equal to 0 bits indicates that the information is default; and N being greater than or equal to 1 bit indicates that the information is valid. An indication function of N bits is described below in conjunction with example 11 to example 15.

It should be noted that example 11 to example 15 are all applicable to the above-mentioned window associated information.

Example 11: in case that the window adjustment indication information includes the window associated information of the second transmission window, and the window associated information includes the window size, the network device may pre-configure a maximum of N or 2N candidate transmission window sizes for the terminal device, and the network device indicates a target candidate transmission window size or an index of a target candidate transmission window size through N bits of window adjustment indication information, and the target candidate transmission window size is the window size of the second transmission window.

Example 12: in case that the window adjustment indication information includes an adjustment indication of the window associated information of the first transmission window, and the window associated information includes the window size, the network device pre-configures a maximum of N or 2N candidate transmission window sizes, and the network device indicates an adjustment direction of the candidate transmission window size through 1 bit of adjustment indication, and a selected candidate transmission window size is the window size of the second transmission window. For example, the pre-configured N candidate transmission window sizes are: {D1, D2, ..., DN}, in case that the window size of the first transmission window is D3, "0" (1 bit is 0) indicates that the candidate transmission window D2 is selected downward, that is, the first candidate transmission window D2 that is smaller than D3, and "1" (1 bit is 1) indicates that the candidate transmission window D4 is selected upward, that is, the first candidate transmission window D4 that is smaller than D3. In any of the embodiments of the present application, the above 1 bit indicates "opening" or "closing" the first transmission window.

Example 13: in case that the window adjustment indication information includes the adjustment step of the window associated information of the first transmission window, and the window associated information includes the window size, the base station may indicate an upward or downward adjustment of one step through 1 bit of adjustment step, and the base station may also indicate an upward or downward adjustment of multiple steps through N bits of adjustment step.

Example 14: N bits of the window adjustment indication information may correspond to sizes of the transmission windows corresponding to N specific services, and a size of a target transmission window may be selected by bit mapping.

Example 15: N bits of the window adjustment indication information may indicate opening or closing of transmission windows for N or 2N specific services, and may also indicate opening or closing of transmission windows for N or 2N secondary cells (SCells) (groups).

For example, in case that N is equal to 3, opening or closing of transmission windows for the three specific services may be indicated by 3 bits respectively, and in case that the 3 bits are 110, the opening of the transmission windows of the first specific service and the second specific service and the opening of the transmission window of the third specific service may be indicated.

In the present application, since the first transmission window may be pre-configured by the base station, the base station may make corresponding adjustments through an RRC reconfiguration method to obtain the second transmission window. However, the RRC reconfiguration method has a certain update period (e.g., 180 milliseconds) requirement, and the method based on the RRC reconfiguration introduces a large delay. In case that the network device configures a larger transmission window for the terminal device, power consumption of the terminal device increases. In case that the network device configures a smaller transmission window for the terminal device, it is impossible to cope with an impact of delay jitter, and a transmission performance of specific services that are sensitive to delay are also affected. Therefore, the present application further proposes to obtain the second transmission window based on a target value of service transmission associated information.

In any of the embodiments of the present application, the method provided by the present application further includes: obtaining a target value of service transmission associated information, where the service transmission associated information is transmission associated information of the first service.

In any of the embodiments of the present application, the target value includes any one of the following:

a statistical value corresponding to a target statistical time window; or

a statistical value corresponding to a target sliding time window.

In any of the embodiments of the present application, the method provided by the present application further includes:

determining target window associated information based on the target value; and

determining a second transmission window based on the target window associated information.

In any of the embodiments of the present application, the target window associated information includes one or more of the following:

a start position of window;

an end position of window;

a window size;

a window period and a window offset;

a window period;

a window offset;

a number of windows in a window period;

a number of windows within a specific time; or

a number of windows.

In any of the embodiments of the present application, the service transmission associated information includes first service transmission associated information and/or second service transmission associated information, and obtaining the target value of the service transmission associated information includes:

receiving a target value of the first service transmission associated information sent from a network device, where the target value of the first service transmission associated information is the target value of the service transmission associated information; or

obtaining the target value of the service transmission associated information based on the second service transmission associated information.

In any of the embodiments of the present application, the first service transmission associated information may be service transmission associated information recorded by the network device.

The target value of the first service transmission associated information is obtained by the network device processing the first service transmission associated information.

In any of the embodiments of the present application, in case that the terminal receives the target value of the first service transmission associated information, it may be determined whether to adjust the transmission window. In case that the transmission window is adjusted, the target window associated information is determined based on the target value. The second transmission window is determined based on the target window associated information.

In any of the embodiments of the present application, if the transmission window is adjusted, the terminal device may also obtain the second transmission window based on any one of the following:

determining the second transmission window based on the target value and a pre-stored quantization threshold value set, where the quantization threshold value set includes multiple quantization threshold value ranges, and each quantization threshold value range corresponds to one candidate transmission window;

determining the second transmission window based on the target value and a pre-stored window adjustment step; or

determining a target start position and a target end position based on the target value, where a start position of the second transmission window is the target start position, and an end position of the second transmission window is the target end position.

In any of the embodiments of the present application, the quantization threshold value set and/or the window adjustment step are obtained based on any one of the following:

configured through higher layer signaling;

pre-configured by protocol; or

a higher layer signaling is an MAC signaling or an RRC signaling.

In case that the first service transmission associated information includes delay jitter of data packet arrival and/or a data transmission delay, an exemplary description is given for determining the second transmission window based on the target value and the pre-stored quantization threshold value set.

For example, a quantization threshold value set {TH1, TH2, ..., THM} of the service transmission associated information is configured by the network device through a higher layer signaling or defined by the network device through a protocol. {TH1, TH2, ..., THM} respectively corresponds to the candidate transmission windows {D1, D2, ..., DM}. After the network device sends the target value to the terminal device, or sets the target value to K bits (K is an integer greater than or equal to 0, and 0 bits indicates that the information field is empty), the terminal device determines whether to adjust the transmission window. For example, in case that the first transmission window is D1, if a received target value is less than TH1, the terminal device does not adjust the transmission window. If the received target value is greater than TH2 and less than TH3, the candidate transmission window D3 is determined as the window size of the second transmission window. Alternatively, if the target value is greater than the threshold value TH1 corresponding to the first transmission window, the terminal device increases the window size D1 of the first transmission window to the candidate transmission window size D3. Conversely, if the target value is greater than TH2 and less than TH3, the corresponding transmission window is D3. If a statistical value received by the terminal is greater than the threshold value TH4 corresponding to a current transmission window, the terminal reduces the transmission window to a transmission window size of D3.

In any of the embodiments of the present application, the second service transmission associated information may be service transmission associated information recorded by the terminal device, or may be service transmission associated information sent from the network device. In case that the second service transmission associated information is service transmission associated information sent from the network device, the second service transmission associated information and the first service transmission associated information may be the same. The terminal device may process the second service transmission associated information to obtain the target value of the service transmission associated information.

The method by which the network device processes the first service transmission associated information to obtain the target value of the service transmission associated information is similar to the method by which the terminal device processes the second service transmission associated information to obtain the target value of the service transmission associated information. The following provides a detailed description for the method by which the network device processes the first service transmission associated information to obtain the target value of the service transmission associated information.

In any of the embodiments of the present application, the method provided by the present application may further include: sending the target value of the service transmission associated information obtained based on the first service transmission associated information to the network device, where the target value is used for the network device to determine the above-mentioned window adjustment indication information.

In any of the embodiments of the present application, the first service transmission associated information and/or the second service transmission associated information includes one or more of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter.

The target layer includes one or more of the following:

a server data adaptation protocol (SDAP) layer;
a packet data convergence protocol (PDCP) layer;
a radio link control (RLC) layer;
a medium access control (MAC) layer; or
a physical layer.

For example, in case that one video may be divided into multiple data frames, or one data frame may be divided into multiple data slices, or multiple data tiles, or multiple protocol data units (PDUs), or multiple PDU sets, or multiple internet protocol (IP) packets, the first target data packet may be any one of the following:

a first data frame, or a last data frame, or a specific data frame among multiple data frames;
a first data slice, or a last data slice, or a specific data slice among multiple data slices;
a first data tile, or a last data tile, or a specific data tile among multiple data tiles;
a first PDU, or a last PDU, or a specific PDU among multiple PDUs;
a first PDU set, or a last PDU set, or a specific PDU set among multiple PDU sets; or
a first IP packet, or a last IP packet, or a specific IP packet among multiple IP packets.

The second target data packet may be any one of the following:

a first data frame, or a last data frame, or a specific data frame among multiple data frames;

a first data slice, or a last data slice, or a specific data slice among multiple data slices;

a first data tile, or a last data tile, or a specific data tile among multiple data tiles;

a first PDU, or a last PDU, or a specific PDU among multiple PDUs;

a first PDU set, or a last PDU set, or a specific PDU set among multiple PDU sets; or

a first IP packet, or a last IP packet, or a specific IP packet among multiple IP packets.

It should be noted that the first target data packet and the second target data packet are different. For example, in case that the first target data packet is the first data slice among multiple data slices of a specific data frame, the second target data packet may be the last data slice among multiple data slices associated with the same data frame. For another example, in case that the first target data packet is the first IP packet among the first PDU set associated with a specific data frame, the first target data packet is the last IP packet among the last PDU set associated with the same specific data frame.

In any of the embodiments of the present application, the first target data packet and the second target data packet may also be the same data frame agreed or specified by a protocol, two data frames among multiple data frames, two data slices among multiple data slices associated with the same data frame, two data tiles among multiple data tiles associated with the same data frame, two PDUs among multiple PDUs associated with the same data frame, or two PDU sets among multiple PDU sets associated with the same data frame.

In any of the embodiments of the present application, $T\_init$ may be at least one of a first time T1, a second time T2, or a third time T3.

T1 is a generation time of a specific data packet in a data frame, a data slice, or a data tile of a service data packet of the first service, T2 is a time of a specific IP packet when a service data packet is divided into an IP packet during network transmission, and T3 is a time of a PDU set identifier or a PDU identifier.

T1, T2, and T3 may be carried from a core network to a target layer of the network device through the service data packet, and the target layer of the network device may obtain T1, T2, and T3.

T1, T2, and T3 may also be a time recorded by the network device for the service data packet based on service characteristics (such as a service refresh rate).

In case that the network device records the time for the service data packet, a time of service data packet set that is associated with the same information (e.g., data frame, data slice, data tile, IP packet, PDU, PDU set) is any one of the following:

a time of a first packet in the service data packet set;

a time of a last packet in the service data packet set; or

an average time of the service data packet set.

$T\_arriv$ may be a fourth moment T4, a fifth moment T5, a sixth moment T6, a seventh moment T7, or an eighth moment T8.

T4 is a time when the service data packet arrives at the SDAP layer, T5 is a time when the service data packet arrives at the PDCP layer, T6 is a time when the service data packet arrives at the RLC layer, T7 is a time when the service data packet arrives at the MAC layer, and T8 is a time when the service data packet arrives at the physical layer.

The above T4, T5, T6, T7, and T8 may be an arrival time of a first data packet with a smaller granularity, or an average arrival time, or an arrival time of a last data packet with a smaller granularity.

$T offset$ is an adjustment parameter for delay jitter calculation. For example, the parameter may be used to adjust an inconsistent time granularity based on generation of service data packets and arrival of data packets at the target layer. A unit of a service data packet generation time may be seconds, milliseconds, or nanoseconds. A time granularity of a target layer statistical data packet arrival time may be frames, half frames, or slots, etc.

$T\_offset$ may also be a processing delay between different target layers.

$T\_offset$ may be a fixed value configured by a protocol, or a value obtained by statistics of the target layer, or a value fed back by the terminal device based on its user capability.

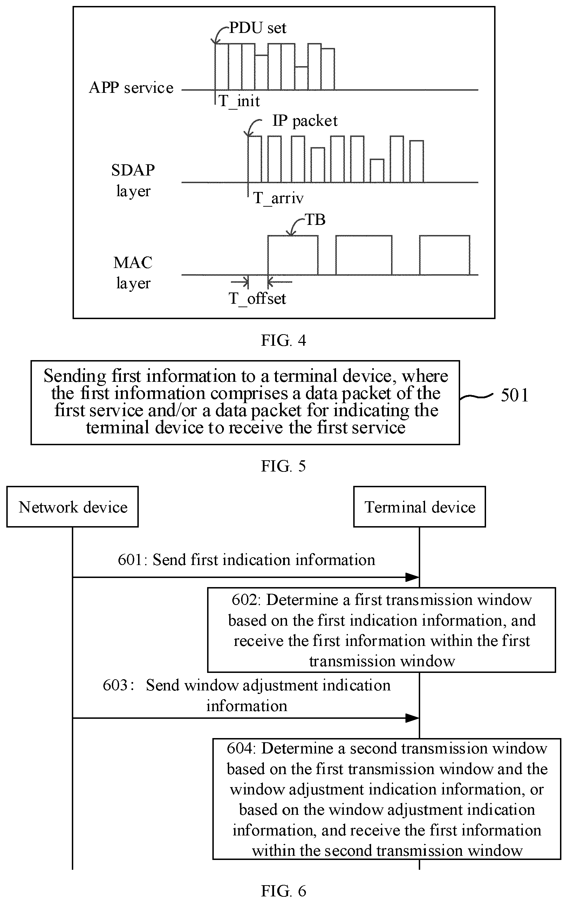

$T\_arriv, T\_init,$ and $T\_offset$ are exemplarily described below with reference to FIG. 4.

FIG. 4 is a schematic diagram of a position relationship of $T\_arriv, T\_init,$ and $T\_offset$ according to an embodiment of the present application. For example, as shown in FIG. 4, during a transmission procedure, a service data packet generated by an application (APP) service carries a data packet generation time $T\_init$ through a PDU set, and one PDU set that arrives at the target layer is associated with multiple IP packets or multiple PDUs. The target layer uses a time when a last IP packet or PDU in the same PDU set arrives at the SDAP layer as a time when the service data packet arrives at the target layer $T\_arriv.$

In any of the embodiments of the present application, a maximum/average/minimum processing delay of the data packet from the SDAP layer to the MAC layer is $T\_offset.$ The base station may output the delay jitter of the data packet arrival at the MAC layer as $T\_arriv - T\_init + T\_offset.$

In the present application, the data packet transmission delay refers to a delay of the service data packet (including any one of: data frame, data slice, data tile, IP packet, PDU or PDU set) to complete a transmission of a specific data packet/a specific data packet set after arriving at the target layer. The specific data packet set may be a set of data packets (e.g., IP packets or transmission blocks (TBs) scheduled by the base station) associated with the same data frame, the same data slice, the same data tile, or the same PDU set. For example, a delay required for the base station to complete a transmission of all data packets associated with the same PDU set includes one or more of the following: a frame synchronization delay, a scheduling delay, a receiving or sending processing delay, or a retransmission delay.

In the present application, the remaining delay of the data packet delay budget (PDB) refers to a remaining delay of the PDB (*T_PDB*) carried by the data packet when the data packet arrives at the target layer. The remaining delay is equal to (*T_PDB - T_jitter - T_offset*), where *T_jitter* represents the delay jitter of the data packet arrival, and *T_offset* represents the delay adjustment parameter. *T_offset* may be a fixed value defined by a protocol or a processing delay between different protocol layers, or an adjustment parameter between data packets of different granularities.

In the present application, the packet loss associated information of data packet due to existence of transmission delay may include a packet loss situation statistic of a specific data packet or a specific data packet set by any one layer such as SDAP layer, PDCP layer, RLC layer, MAC layer, physical layer, etc. The packet loss situation includes, for example, any one of a packet loss rate, a reception success rate, and a threshold value of satisfying or not satisfying a specific packet loss rate or success rate, etc., where the threshold value may be defined based on a protocol or may be a value negotiated by the network device and the terminal device.

In the present application, the time interval between the data packet arrival position and the start position of the first transmission window may refer to a time interval between an arrival time of a specific data packet or a specific data packet in a specific data packet set at the target side and the start position or end time of the first transmission window, and the specific data packet in the specific data packet set may be a first data packet or a last data packet in the data packet set, or a data packet corresponding to the average arrival time.

In the present application, the time interval between the data packet arrival position and the end position of the first transmission window may refer to a time interval between an arrival time of a specific data packet or a specific data packet in a specific data packet set at the target side and the end position or end time of the first transmission window, and the specific data packet in the specific data packet set may be a first data packet or a last data packet in the data packet set, or a data packet corresponding to the average arrival time.

The specific data packet in a non-specific data packet set refers to any one of a data frame, a data slice, a data tile, an IP packet, a PDU set, or a transmission block.

The specific data packet set may be a set of corresponding data packets (for example, an IP packet or a TB) associated with the same data frame, the same data slice, the same data tile, or the same PDU set.

In the present application, the available transmission delay of the data packet refers to a delay that may be used for transmission between a network device and a terminal device in case that the data packet arrives at the target layer and satisfies at least one of a quality of service (QoS) requirement or a user service quality of experience (QoE) parameter. For example, taking PDB for Qos requirement as an example, and taking terminal play buffer time for QoE as an example, the available transmission delay of the data packet = max {remaining delay of the data packet delay budget (PDB), terminal play buffer time}, where max is a calculation for maximum value. The user service experience parameter includes at least one of a service play delay or a terminal play buffer time. The terminal play buffer time refers to a time during which service data currently stored in the terminal may be used for playing.

FIG. 5 is a second schematic flowchart of a method for service transmission according to an embodiment of the present application. As show in FIG. 5, the method includes the following step.

Step 501: sending first information to a terminal device, where the first information includes a data packet of the first service and/or a data packet for indicating the terminal device to receive the first service.

In the method for service transmission provided by the present application, the network device sends the first information to the terminal device. In case that the first information includes the data packet of the first service, the terminal device may receive the data packet of the first service within the first transmission window, thereby avoiding the problem of delay jitter in the data packet of the first service received by the terminal device. In case that the first information is used to indicate the terminal device to receive the data packet of the first service, the terminal device may receive the data packet of the first service based on the first information, thereby avoiding delay jitter in the data packet of the first service received by the terminal device.

In any of the embodiments of the present application, the method for service transmission further includes: sending window adjustment indication information to the terminal device, where the window adjustment indication information is used to indicate the terminal device to determine a second transmission window and receive the first information within the second transmission window.

In any of the embodiments of the present application, the method for service transmission further includes: obtaining a target value of service transmission associated information, where the service transmission associated information is transmission associated information of the first service.

The service transmission associated information includes first service transmission associated information and/or second service transmission associated information, and obtaining the target value of the service transmission associated information includes:

obtaining a target value of the first service transmission associated information based on the first service transmission associated information, where the target value of the first service transmission associated information is the target value of the service transmission associated information; or

receiving the target value of the service transmission associated information obtained based on the second service transmission associated information sent from the terminal device.

In any of the embodiments of the present application, the network device sends the target value of the first service transmission associated information to the terminal device through a physical layer signaling or an MAC layer signaling.

In any of the embodiments of the present application, the explanation of the first service transmission associated information and the second service transmission associated information may be referred to the above embodiments, which is not repeated here.

In any of the embodiments of the present application, the method for service transmission further includes: sending the target value of the first service transmission associated information to the terminal device.

In any of the embodiments of the present application, the target value is obtained based on any one of the following ways:

a processing way pre-configured by a protocol; or

a processing way corresponding to the first service.

In any of the embodiments of the present application, the target value includes any one of the following:

a statistical value corresponding to a target statistical time window; or

a statistical value corresponding to a target sliding time window.

In any of the embodiments of the present application, the target statistical time window, associated information of the target statistical time window, and the target sliding time window are obtained based on one or more of the following ways:

pre-configured by a protocol; or
indicated by the terminal device.

In any of the embodiments of the present application, the associated information of the target statistical time window includes at least one of the following:

a size of a window;

a number of statistical values in a statistical window;

a time interval between statistical values;

a minimum number of measured values in a window; or

a minimum time interval before a statistical value.

In any of the embodiments of the present application, the first service transmission associated information and/or the second service transmission associated information includes at least one of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model. An explanation of the first calculation model may be referred to the above embodiments.

In any of the embodiments of the present application, in case that the first service transmission associated information includes the delay jitter of the data packet arrival, the base station performs statistics on the delay jitter of the data packet and/or the data packet set to obtain the target value, which may include one or more of the following:

performing separate statistics on the delay jitter of the data packet and/or the data packet set;

calculating a statistical value of a statistical delay jitter within the target statistical time window, for example, obtaining an average delay jitter within the statistical time window; or

performing smoothing calculation on a statistical value of a delay jitter of a statistical data packet and/or data packet set within the target sliding time window.

The smoothing calculation of the statistical value may be an internal algorithm of the network device, or may be a weighted calculation of the statistical value. In case that the statistical values of adjacent target statistical windows or the statistical values of two adjacent data packets are obtained, the smoothing result is: $\alpha \times TN + (1- \alpha) \times TN\text{-}1$, where $\alpha$ is a weighting factor, $TN$ represents a statistical value of an N-th target statistical window (or a statistical value of an N-th data packet), and $TN\text{-}1$ represents a statistical value of an (N-1)-th target statistical window (or a statistical value of an (N-1)-th data packet).

A size of the target sliding time window is associated with a service transmission characteristic of the first service. For example, the size of the target sliding time window may be an integer multiple of a service generation cycle, an integer multiple of a specific value (e.g., 50 milliseconds), an integer multiple of the target statistical window, an integer multiple of a first transmission window cycle, an integer multiple of a second transmission window cycle, or an integer multiple of a DRX cycle.

In the present application, the first transmission window and/or the second transmission window satisfies at least one of the following:

does not overlap with a time period configured by DRX;

located within a DRX on duration; or

located within a DRX off duration.

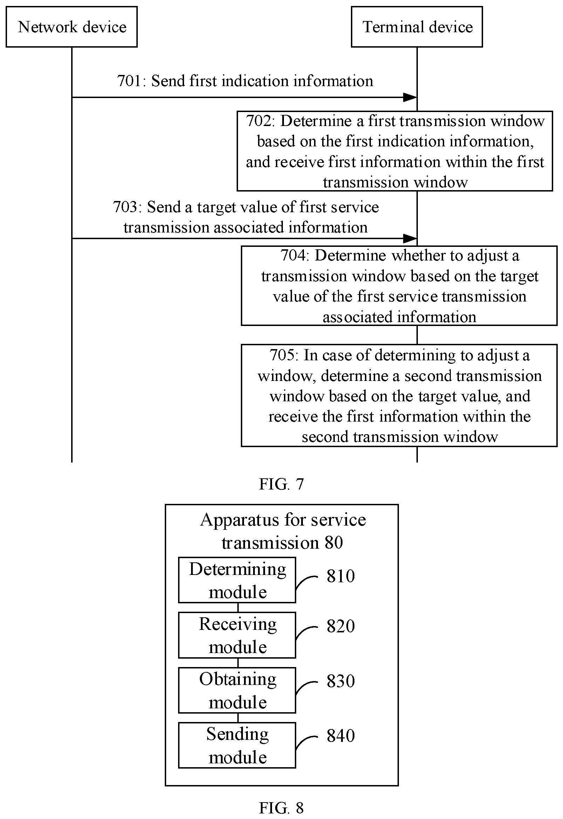

In the present application, the above embodiments are combined to obtain the following embodiments of FIG. 6 and FIG. 7. The same or similar contents as above are not repeated in FIG. 6 and FIG. 7.

FIG. 6 is a first schematic flowchart of an interaction between a network device and a terminal device according to an embodiment of the present application. As shown in FIG. 6, the method includes the following steps.

Step 601: a network device sends first indication information to a terminal device.

Step 602: the terminal device determines a first transmission window based on the first indication information, and receives the first information within the first transmission window.

Step 603: the network device sends window adjustment indication information to the terminal device.

In any of the embodiments of the present application, the network device may determine a target value of first service transmission associated information based on first service transmission associated information, determine whether to adjust the transmission window based on the target value, and send the window adjustment indication information to the terminal device in case that it is determined to adjust the transmission window.

In any of the embodiments of the present application, the network device may obtain the target value based on second service transmission associated information sent from the terminal device, determine whether to adjust the transmission window, and send the window adjustment indication information to the terminal device in case that it is determined to adjust the transmission window.

Step 604: the terminal device determines a second transmission window based on the first transmission window and the window adjustment indication information, or based on the window adjustment indication information, and receives the first information within the second transmission window.

FIG. 7 is a second schematic flowchart of an interaction between a network device and a terminal device according to an embodiment of the present application. As shown in FIG. 7, it includes the following steps.

Step 701: a network device sends first indication information to a terminal device.

Step 702: the terminal device determines a first transmission window based on the first indication information, and receives first information within the first transmission window.

Step 703: the network device sends a target value of first service transmission associated information to the terminal device.

Step 704: the terminal device determines whether to adjust a transmission window based on the target value of the first service transmission associated information.

Step 705: in case of determining to adjust a window, the terminal device determines a second transmission window based on the target value, and receives the first information within the second transmission window.

Determining the second transmission window based on the target value includes any one of the following:

determining target window associated information based on the target value; and determining the second transmission window based on target window associated information;

determining the second transmission window based on the target value and a pre-stored quantization threshold value set, where the quantization threshold value set includes multiple quantization threshold value ranges, and each quantization threshold value range corresponds to one candidate transmission window;

determining the second transmission window based on the target value and a pre-stored window adjustment step; or

determining a target start position and a target end position based on the target value, where a start position of the second transmission window is the target start position, and an end position of the second transmission window is the target end position.

An apparatus for service transmission provided by the present application is described below, and the apparatus for service transmission described below and the method for service transmission described above may be referred to each other.

FIG. 8 is a first schematic structural diagram of an apparatus for service transmission according to an embodiment of the present application. The apparatus for service transmission is for use in a terminal device. As shown in FIG. 8, the apparatus for service transmission 80 includes:

a determining module 810, used for determining a first transmission window corresponding to a first service; and

a receiving module 820, used for receiving first information in the first transmission window, where the first information includes a data packet of the first service and/or a data packet for indicating a terminal device to receive the first service.

In any of the embodiments of the present application, the first transmission window is one or more of the following:

a time period where a target transmission resource is located, where the target transmission resource is a transmission resource configured for the first service;

a monitor window for downlink control information (DCI), where the DCI is used to schedule the first service; or

a receiving window for a signaling or a channel carrying a service transmission indication.

In any of the embodiments of the present application, the receiving module 820 is further used for receiving window adjustment indication information; and

the determining module 810 is further used for determining a second transmission window based on the first transmission window and the window adjustment indication information, or based on the window adjustment indication information, and receiving the first information within the second transmission window.

In any of the embodiments of the present application, in case of determining the second transmission window based on the window adjustment indication information, the window adjustment indication information includes one or more of the following:

window associated information of the second transmission window; or

an index of window associated information of the second transmission window.

In any of the embodiments of the present application, in case of determining the second transmission window based on the first transmission window and the window adjustment indication information, the window adjustment indication information includes one or more of the following:

an adjustment step of window associated information of the first transmission window; or

an adjustment indication of window associated information of the first transmission window, where the adjustment indication is used to indicate to adjust associate information of the first transmission window, or to indicate to open or close of the first transmission window.

In any of the embodiments of the present application, a signaling carrying the window adjustment indication information is any one of the following:

a physical layer signaling; or

a medium access control (MAC) layer signaling.

In any of the embodiments of the present application, the apparatus further includes an obtaining module 830, where the obtaining module 830 is used for obtaining a target value of service transmission associated information, where the service transmission associated information is transmission associated information of the first service.

In any of the embodiments of the present application, the determining module 810 is further used for:

determining target window associated information based on the target value; and

determining a second transmission window based on the target window associated information.

In any of the embodiments of the present application, the service transmission associated information includes first service transmission associated information and/or second service transmission associated information, and the obtaining module 830 is further used for:

receiving a target value of the first service transmission associated information sent from a network device, where the target value of the first service transmission associated information is the target value of the service transmission associated information; or

obtaining the target value of the service transmission associated information based on the second service transmission associated information.

In any of the embodiments of the present application, the apparatus further includes:
a sending module 840, used for sending the target value of the service transmission associated information obtained based on the second service transmission associated information to a network device, where the target value is used for the network device to determine window adjustment indication information.

In any of the embodiments of the present application, the first service transmission associated information and/or the second service transmission associated information includes one or more of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

In any of the embodiments of the present application, the window associated information and/or the target window associated information includes one or more of the following:

a start position of window;

an end position of window;

a window size;

a window period and a window offset;

a window period;

a window offset;

a number of windows in a window period;

a number of windows within a specific time; or

a number of windows.

In any of the embodiments of the present application, the target value includes any one of the following:

a statistical value corresponding to a target statistical time window; or
a statistical value corresponding to a target sliding time window.

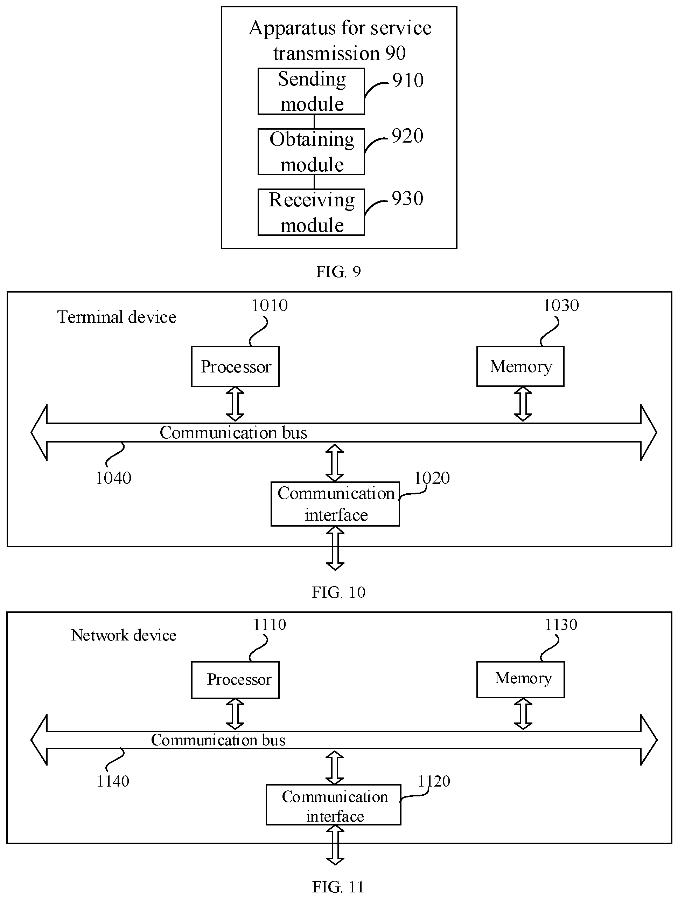

FIG. 9 is a second schematic structural diagram of an apparatus for service transmission according to an embodiment of the present application. The apparatus is for use in a network device, and the apparatus for service transmission 90 includes:

a sending module 910, used for sending first information to a terminal device, where the first information includes a data packet of the first service and/or a data packet for indicating the terminal device to receive the first service.

In any of the embodiments of the present application, the sending module 910 is further used for:

sending window adjustment indication information to the terminal device, where the window adjustment indication information is used to indicate the terminal device to determine a second transmission window and receive the first information within the second transmission window.

In any of the embodiments of the present application, the apparatus further includes:

an obtaining module 920, used for obtaining a target value of service transmission associated information, where the service transmission associated information is transmission associated information of the first service.

In any of the embodiments of the present application, the service transmission associated information includes first service transmission associated information and/or second service transmission associated information, and the obtaining module 920 is further used for:

obtaining a target value of the first service transmission associated information based on the first service transmission associated information, where the target value of the first service transmission associated information is the target value of the service transmission associated information; or

the apparatus for service transmission further includes a receiving module 930, used for receiving the target value of the service transmission associated information obtained based on the second service transmission associated information sent from the terminal device.

In any of the embodiments of the present application, the sending module 910 is further used for:

sending the target value of the first service transmission associated information to the terminal device.

In any of the embodiments of the present application, the target value is obtained based on any one of the following ways:

a processing way pre-configured by a protocol; or

a processing way corresponding to the first service.

In any of the embodiments of the present application, the target value includes any one of the following:

a statistical value corresponding to a target statistical time window; or

a statistical value corresponding to a target sliding time window.

In any of the embodiments of the present application, the target statistical time window, associated information of the target statistical time window, and the target sliding time window are obtained based on one or more of the following ways:

pre-configured by a protocol; or

indicated by the terminal device.

In any of the embodiments of the present application, the first service transmission associated information and/or the second service transmission associated information includes at least one of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

FIG. 10 is a schematic diagram of an entity structure of a terminal device according to an embodiment of the present application. As show in FIG. 10, the terminal device may include a processor 1010, a communications interface 1020, a memory 1030, and a communications bus 1040. The processor 1010, the communications interface 1020, and the memory 1030 communicate with each other via the communication bus 1040. The processor 1010 may call logic instructions in the memory 1030 to perform a method for service transmission, and the method includes: determining a first transmission window corresponding to a first service; and receiving first information in the first transmission window, where the first information includes a data packet of the first service and/or a data packet for indicating the terminal device to receive the first service.

In any of the embodiments of the present application, the first transmission window is one or more of the following:

a time period where a target transmission resource is located, where the target transmission resource is a transmission resource configured for the first service;

a monitor window for downlink control information (DCI), where the DCI is used to schedule the first service; or

a receiving window for a signaling or a channel carrying a service transmission indication.

In any of the embodiments of the present application, the processor 1010 is further used for:

receiving window adjustment indication information; and

determining a second transmission window based on the first transmission window and the window adjustment indication information, or based on the window adjustment indication information, and receiving the first information within the second transmission window.

In any of the embodiments of the present application, in case of determining the second transmission window based on the window adjustment indication information, the window adjustment indication information includes one or more of the following:

window associated information of the second transmission window; or

an index of window associated information of the second transmission window.

In any of the embodiments of the present application, in case of determining the second transmission window based on the first transmission window and the window adjustment indication information, the window adjustment indication information includes one or more of the following:

an adjustment step of window associated information of the first transmission window; or

an adjustment indication of window associated information of the first transmission window, where the adjustment indication is used to indicate to adjust associate information of the first transmission window, or to indicate to open or close of the first transmission window.

In any of the embodiments of the present application, a signaling carrying the window adjustment indication information is any one of the following:

a physical layer signaling; or

a medium access control (MAC) layer signaling.

In any of the embodiments of the present application, the processor 1010 is further used for:
obtaining a target value of service transmission associated information, where the service transmission associated information is transmission associated information of the first service.

In any of the embodiments of the present application, the processor 1010 is further used for:

determining target window associated information based on the target value; and

determining a second transmission window based on the target window associated information.

In any of the embodiments of the present application, the service transmission associated information includes first service transmission associated information and/or second service transmission associated information, and the processor 1010 is used for:

receiving a target value of the first service transmission associated information sent from a network device, where the target value of the first service transmission associated information is the target value of the service transmission associated information; or

obtaining the target value of the service transmission associated information based on the second service transmission associated information.

In any of the embodiments of the present application, the processor 1010 is used for:
sending the target value of the service transmission associated information obtained based on the second service transmission associated information to a network device, where the target value is used for the network device to determine window adjustment indication information.

In any of the embodiments of the present application, the first service transmission associated information and/or the second service transmission associated information includes one or more of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

In any of the embodiments of the present application, the window associated information and/or the target window associated information includes one or more of the following:

a start position of window;

an end position of window;

a window size;

a window period and a window offset;

a window period;

a window offset;

a number of windows in a window period;

a number of windows within a specific time; or

a number of windows.

In any of the embodiments of the present application, the target value includes any one of the following:

a statistical value corresponding to a target statistical time window; or

a statistical value corresponding to a target sliding time window.

FIG. 11 is a schematic diagram of an entity structure of a network device according to an embodiment of the present application. As shown in FIG. 11, the network device may include a processor 1110, a communications interface 1120, a memory 1130, and a communications bus 1140. The processor 1110, the communications interface 1120, and the memory 1130 communicate with each other via the communication bus 1140. The processor 1110 may call logic instructions in the memory 1130 to perform a method for service transmission, and the method includes: sending first information to a terminal device, where the first information includes a data packet of the first service and/or a data packet for indicating the terminal device to receive the first service.

In any of the embodiments of the present application, the processor 1110 is further used for:
sending window adjustment indication information to the terminal device, where the window adjustment indication information is used to indicate the terminal device to determine a second transmission window and receive the first information within the second transmission window.

In any of the embodiments of the present application, the processor 1110 is further used for:
obtaining a target value of service transmission associated information, where the service transmission associated information is transmission associated information of the first service.

In any of the embodiments of the present application, the service transmission associated information includes first service transmission associated information and/or second service transmission associated information, and the processor 1110 is used for:

obtaining a target value of the first service transmission associated information based on the first service transmission associated information, where the target value of the first service transmission associated information is the target value of the service transmission associated information; or

receiving the target value of the service transmission associated information obtained based on the second service transmission associated information sent from the terminal device.

In any of the embodiments of the present application, the processor 1110 is further used for:
sending the target value of the first service transmission associated information to the terminal device.

In any of the embodiments of the present application, the target value is obtained based on any one of the following ways:

a processing way pre-configured by a protocol; or

a processing way corresponding to the first service.

In any of the embodiments of the present application, the target value includes any one of the following:

a statistical value corresponding to a target statistical time window; or

a statistical value corresponding to a target sliding time window.

In any of the embodiments of the present application, the target statistical time window, associated information of the target statistical time window, and the target sliding time window are obtained based on one or more of the following ways:

pre-configured by a protocol; or

indicated by the terminal device.

In any of the embodiments of the present application, the first service transmission associated information and/or the second service transmission associated information includes at least one of the following:

a delay jitter of data packet arrival;

a transmission delay of data packet;

a remaining delay of data packet delay budget (PDB);

an available transmission delay of data packet;

packet loss associated information of data packet due to existence of transmission delay;

a time interval between a data packet arrival position and a start position of the first transmission window;

a time interval between a data packet arrival position and an end position of the first transmission window;

channel state information of data packet transmission; or

transmission rate associated information of data packet.

In any of the embodiments of the present application, the delay jitter of data packet arrival is obtained through a first calculation model, and the first calculation model is:

$$T\_t = T\_arriv - T\_init + T\_offset,$$

where $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

where the target layer includes one or more of the following:

a server data adaptation protocol (SDAP) layer;

a packet data convergence protocol (PDCP) layer;

a radio link control (RLC) layer;

a medium access control (MAC) layer; or

a physical layer.

In addition, if the logic instructions in the above-mentioned memories 1030 and 1130 can be implemented in the form of a software functional unit and sold or used as an independent product, they may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

The present application further provides a computer program product including a computer program, and the computer program may be stored in a non-transitory computer readable storage medium. In case that the computer program is executed by a processor, the computer may perform any of the methods performed by the terminal device or the network device described above.

The present application further provides a non-transitory computer readable storage medium storing a computer program, where the computer program is used to cause a processor to perform any of the methods performed by the terminal device or the network device described above.

The apparatus embodiments described above are merely illustrative, where the units described as separate components may or may not be physically separated, and the components displayed as units may or may not be physical units, i.e., they may be located in one place, or they may be distributed on multiple network elements. Some or all of the modules may be selected according to actual needs to achieve the objectives of the solutions of the embodiments. Those of ordinary skill in the art may understand and implement the solutions without paying creative labor.

Through the description of the above embodiments, those skilled in the art can clearly understand that each embodiment can be realized by means of software plus the necessary general hardware platform, and certainly can also be realized by hardware. Based on such understanding, the above-mentioned solution in essence or a part of the solutions that contributes to the prior art can be embodied in the form of a software product, and this computer software product can be stored in a computer-readable storage medium, such as ROM/RAM, a magnetic disk, an optical disk, etc., including several instructions to make a computer device (which may be a personal computer, a server, or a network device, etc.) to perform the methods of various embodiments or some parts of the embodiments.

It should be noted that the above embodiments are only used to illustrate the solutions of the present application, rather than to limit them. Although the present application has been described in detail with reference to the foregoing embodiments, those of ordinary skill in the art should understand that the solutions described in the foregoing embodiments can still be modified, or some of the features can be replaced by equivalents. However, these modifications or replacements do not deviate the essence of the corresponding solutions from the scope of the solutions of the embodiments of the present application.

**Claims**

1. A method for service transmission, performed by a terminal device, comprising:

   determining a first transmission window corresponding to a first service; and
   receiving first information in the first transmission window, wherein the first information comprises a data packet of the first service and/or a data packet for indicating the terminal device to receive the first service.

2. The method of claim 1, wherein the first transmission window is one or more of the following:

   a time period where a target transmission resource is located, wherein the target transmission resource is a transmission resource configured for the first service;
   a monitor window for downlink control information, DCI, wherein the DCI is used to schedule the first service; or
   a receiving window for a signaling or a channel carrying a service transmission indication.

3. The method of claim 1 or 2, further comprising:

   receiving window adjustment indication information; and
   determining a second transmission window based on the first transmission window and the window adjustment indication information, or based on the window adjustment indication information, and receiving the first information within the second transmission window.

4. The method of claim 3, wherein in case of determining the second transmission window based on the window adjustment indication information, the window adjustment indication information comprises one or more of the following:

   window associated information of the second transmission window; or
   an index of window associated information of the second transmission window.

5. The method of claim 3, wherein in case of determining the second transmission window based on the first transmission window and the window adjustment indication information, the window adjustment indication information comprises one or more of the following:

   an adjustment step of window associated information of the first transmission window; or
   an adjustment indication of window associated information of the first transmission window, wherein the adjustment indication is used to indicate to adjust associate information of the first transmission window, or to indicate to open or close of the first transmission window.

6. The method of any one of claims 3 to 5, wherein a signaling carrying the window adjustment indication information is any one of the following:

   a physical layer signaling; or
   a medium access control, MAC, layer signaling.

7. The method of claim 1 or 2, further comprising:
   obtaining a target value of service transmission associated information, wherein the service transmission associated information is transmission associated information of the first service.

8. The method of claim 7, further comprising:

determining target window associated information based on the target value; and
determining a second transmission window based on the target window associated information.

9. The method of claim 7, wherein the service transmission associated information comprises first service transmission associated information and/or second service transmission associated information, and obtaining the target value of the service transmission associated information comprises:

receiving a target value of the first service transmission associated information sent from a network device, wherein the target value of the first service transmission associated information is the target value of the service transmission associated information; or
obtaining the target value of the service transmission associated information based on the second service transmission associated information.

10. The method of claim 9, further comprising:
sending the target value of the service transmission associated information obtained based on the second service transmission associated information to a network device, wherein the target value is used for the network device to determine window adjustment indication information.

11. The method of claim 9, wherein the first service transmission associated information and/or the second service transmission associated information comprises one or more of the following:

a delay jitter of data packet arrival;
a transmission delay of data packet;
a remaining delay of data packet delay budget, PDB;
an available transmission delay of data packet;
packet loss associated information of data packet due to existence of transmission delay;
a time interval between a data packet arrival position and a start position of the first transmission window;
a time interval between a data packet arrival position and an end position of the first transmission window;
channel state information of data packet transmission; or
transmission rate associated information of data packet.

12. The method of claim 11, wherein the delay jitter of data packet arrival is obtained through a first calculation model, and the first calculation model is:

$$T\_t = T\_arriv - T\_init + T\_offset,$$

wherein $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,
wherein the target layer comprises one or more of the following:

a server data adaptation protocol, SDAP, layer;
a packet data convergence protocol, PDCP, layer;
a radio link control, RLC, layer;
a medium access control, MAC, layer; or
a physical layer.

13. The method of any one of claims 4, 5 or 8, wherein the window associated information and/or the target window associated information comprises one or more of the following:

a start position of window;
an end position of window;
a window size;
a window period and a window offset;
a window period;
a window offset;
a number of windows in a window period;

a number of windows within a specific time; or
a number of windows.

14. The method of any one of claims 7 to 10, wherein the target value comprises any one of the following:

a statistical value corresponding to a target statistical time window; or
a statistical value corresponding to a target sliding time window.

15. A method for service transmission, performed by a network device, comprising:
sending first information to a terminal device, wherein the first information comprises a data packet of the first service and/or a data packet for indicating the terminal device to receive the first service.

16. The method of claim 15, further comprising:
sending window adjustment indication information to the terminal device, wherein the window adjustment indication information is used to indicate the terminal device to determine a second transmission window and receive the first information within the second transmission window.

17. The method of claim 15, further comprising:
obtaining a target value of service transmission associated information, wherein the service transmission associated information is transmission associated information of the first service.

18. The method of claim 17, wherein the service transmission associated information comprises first service transmission associated information and/or second service transmission associated information, and obtaining the target value of the service transmission associated information comprises:

obtaining a target value of the first service transmission associated information based on the first service transmission associated information, wherein the target value of the first service transmission associated information is the target value of the service transmission associated information; or
receiving the target value of the service transmission associated information obtained based on the second service transmission associated information sent from the terminal device.

19. The method of claim 18, further comprising:
sending the target value of the first service transmission associated information to the terminal device.

20. The method of claim 17, wherein the target value is obtained based on any one of the following ways:

a processing way pre-configured by a protocol; or
a processing way corresponding to the first service.

21. The method of claim 20, wherein the target value comprises any one of the following:

a statistical value corresponding to a target statistical time window; or
a statistical value corresponding to a target sliding time window.

22. The method of claim 21, wherein the target statistical time window, associated information of the target statistical time window, and the target sliding time window are obtained based on one or more of the following ways:

pre-configured by a protocol; or
indicated by the terminal device.

23. The method of claim 18, wherein the first service transmission associated information and/or the second service transmission associated information comprises at least one of the following:

a delay jitter of data packet arrival;
a transmission delay of data packet;
a remaining delay of data packet delay budget, PDB;
an available transmission delay of data packet;
packet loss associated information of data packet due to existence of transmission delay;

a time interval between a data packet arrival position and a start position of the first transmission window;
a time interval between a data packet arrival position and an end position of the first transmission window;
channel state information of data packet transmission; or
transmission rate associated information of data packet.

24. The method of claim 23, wherein the delay jitter of data packet arrival is obtained through a first calculation model, and the first calculation model is:

$$T\_t = T\_arriv - T\_init + T\_offset,$$

wherein $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,
wherein the target layer comprises one or more of the following:

   a server data adaptation protocol, SDAP, layer;
   a packet data convergence protocol, PDCP, layer;
   a radio link control, RLC, layer;
   a medium access control, MAC, layer; or
   a physical layer.

25. A terminal device, comprising a memory, a transceiver and a processor,
wherein the memory is used for storing a computer program, the transceiver is used for receiving and sending data under control of the processor, and the processor is used for reading the computer program in the memory and performing the following operations:

   determining a first transmission window corresponding to a first service; and
   receiving first information in the first transmission window, wherein the first information comprises a data packet of the first service and/or a data packet for indicating the terminal device to receive the first service.

26. The terminal device of claim 25, wherein the first transmission window is one or more of the following:

   a time period where a target transmission resource is located, wherein the target transmission resource is a transmission resource configured for the first service;
   a monitor window for downlink control information, DCI, wherein the DCI is used to schedule the first service; or
   a receiving window for a signaling or a channel carrying a service transmission indication.

27. The terminal device of claim 25 or 26, wherein the processor is further used for:

   receiving window adjustment indication information; and
   determining a second transmission window based on the first transmission window and the window adjustment indication information, or based on the window adjustment indication information, and receiving the first information within the second transmission window.

28. The terminal device of claim 27, wherein in case of determining the second transmission window based on the window adjustment indication information, the window adjustment indication information comprises one or more of the following:

   window associated information of the second transmission window; or
   an index of window associated information of the second transmission window.

29. The terminal device of claim 27, wherein in case of determining the second transmission window based on the first transmission window and the window adjustment indication information, the window adjustment indication information comprises one or more of the following:

   an adjustment step of window associated information of the first transmission window; or
   an adjustment indication of window associated information of the first transmission window, wherein the adjustment indication is used to indicate to adjust associate information of the first transmission window, or to indicate to open or close of the first transmission window.

30. The terminal device of any one of claims 27 to 29, wherein a signaling carrying the window adjustment indication information is any one of the following:

a physical layer signaling; or
a medium access control, MAC, layer signaling.

31. The terminal device of claim 25 or 26, wherein the processor is further used for:
obtaining a target value of service transmission associated information, wherein the service transmission associated information is transmission associated information of the first service.

32. The terminal device of claim 31, wherein the processor is further used for:

determining target window associated information based on the target value; and
determining a second transmission window based on the target window associated information.

33. The terminal device of claim 31, wherein the service transmission associated information comprises first service transmission associated information and/or second service transmission associated information, and the processor is further used for:

receiving a target value of the first service transmission associated information sent from a network device, wherein the target value of the first service transmission associated information is the target value of the service transmission associated information; or
obtaining the target value of the service transmission associated information based on the second service transmission associated information.

34. The terminal device of claim 3, wherein the processor is further used for:
sending the target value of the service transmission associated information obtained based on the second service transmission associated information to a network device, wherein the target value is used for the network device to determine window adjustment indication information.

35. The terminal device of claim 33, wherein the first service transmission associated information and/or the second service transmission associated information comprises one or more of the following:

a delay jitter of data packet arrival;
a transmission delay of data packet;
a remaining delay of data packet delay budget, PDB;
an available transmission delay of data packet;
packet loss associated information of data packet due to existence of transmission delay;
a time interval between a data packet arrival position and a start position of the first transmission window;
a time interval between a data packet arrival position and an end position of the first transmission window;
channel state information of data packet transmission; or
transmission rate associated information of data packet.

36. The terminal device of claim 35, wherein the delay jitter of data packet arrival is obtained through a first calculation model, and the first calculation model is:

$$T\_t = T\_arriv - T\_init + T\_offset,$$

wherein $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,
wherein the target layer comprises one or more of the following:

a server data adaptation protocol, SDAP, layer;

40

a packet data convergence protocol, PDCP, layer;
a radio link control, RLC, layer;
a medium access control, MAC, layer; or
a physical layer.

37. The terminal device of any one of claims 28, 29 or 32, wherein the window associated information and/or the target window associated information comprises one or more of the following:

a start position of window;
an end position of window;
a window size;
a window period and a window offset;
a window period;
a window offset;
a number of windows in a window period;
a number of windows within a specific time; or
a number of windows.

38. The terminal device of any one of claims 31 to 34, wherein the target value comprises any one of the following:

a statistical value corresponding to a target statistical time window; or
a statistical value corresponding to a target sliding time window.

39. A network device, comprising a memory, a transceiver and a processor,
wherein the memory is used for storing a computer program, the transceiver is used for receiving and sending data under control of the processor, and the processor is used for reading the computer program in the memory and performing the following operations:
sending first information to a terminal device, wherein the first information comprises a data packet of the first service and/or a data packet for indicating the terminal device to receive the first service.

40. The network device of claim 39, wherein the processor is further used for:
sending window adjustment indication information to the terminal device, wherein the window adjustment indication information is used to indicate the terminal device to determine a second transmission window and receive the first information within the second transmission window.

41. The network device of claim 40, wherein the processor is further used for:
obtaining a target value of service transmission associated information, wherein the service transmission associated information is transmission associated information of the first service.

42. The network device of claim 41, wherein the service transmission associated information comprises first service transmission associated information and/or second service transmission associated information, and the processor is used for:

obtaining a target value of the first service transmission associated information based on the first service transmission associated information, wherein the target value of the first service transmission associated information is the target value of the service transmission associated information; or
receiving the target value of the service transmission associated information obtained based on the second service transmission associated information sent from the terminal device.

43. The network device of claim 42, wherein the processor is further used for:
sending the target value of the first service transmission associated information to the terminal device.

44. The network device of claim 41, wherein the target value is obtained based on any one of the following ways:

a processing way pre-configured by a protocol; or
a processing way corresponding to the first service.

45. The network device of claim 44, wherein the target value comprises any one of the following:

a statistical value corresponding to a target statistical time window; or
a statistical value corresponding to a target sliding time window.

46. The network device of claim 45, wherein the target statistical time window, associated information of the target statistical time window, and the target sliding time window are obtained based on one or more of the following ways:

pre-configured by a protocol; or
indicated by the terminal device.

47. The network device of claim 42, wherein the first service transmission associated information and/or the second service transmission associated information comprises at least one of the following:

a delay jitter of data packet arrival;
a transmission delay of data packet;
a remaining delay of data packet delay budget, PDB;
an available transmission delay of data packet;
packet loss associated information of data packet due to existence of transmission delay;
a time interval between a data packet arrival position and a start position of the first transmission window;
a time interval between a data packet arrival position and an end position of the first transmission window;
channel state information of data packet transmission; or
transmission rate associated information of data packet.

48. The network device of claim 47, wherein the delay jitter of data packet arrival is obtained through a first calculation model, and the first calculation model is:

$$T\_t = T\_arriv - T\_init + T\_offset,$$

wherein $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,
wherein the target layer comprises one or more of the following:

a server data adaptation protocol, SDAP, layer;
a packet data convergence protocol, PDCP, layer;
a radio link control, RLC, layer;
a medium access control, MAC, layer; or
a physical layer.

49. An apparatus for service transmission, comprising:

a determining module, used for determining a first transmission window corresponding to a first service; and
a receiving module, used for receiving first information in the first transmission window, wherein the first information comprises a data packet of the first service and/or a data packet for indicating a terminal device to receive the first service.

50. The apparatus of claim 49, wherein the first transmission window is one or more of the following:

a time period where a target transmission resource is located, wherein the target transmission resource is a transmission resource configured for the first service;
a monitor window for downlink control information, DCI, wherein the DCI is used to schedule the first service; or
a receiving window for a signaling or a channel carrying a service transmission indication.

51. The apparatus of claim 49 or 50, wherein

the receiving module is further used for receiving window adjustment indication information; and
the determining module is further used for determining a second transmission window based on the first transmission window and the window adjustment indication information, or based on the window adjustment indication information, and receiving the first information within the second transmission window.

**52.** The apparatus of claim 51, wherein in case of determining the second transmission window based on the window adjustment indication information, the window adjustment indication information comprises one or more of the following:

window associated information of the second transmission window; or
an index of window associated information of the second transmission window.

**53.** The apparatus of claim 51, wherein in case of determining the second transmission window based on the first transmission window and the window adjustment indication information, the window adjustment indication information comprises one or more of the following:

an adjustment step of window associated information of the first transmission window; or
an adjustment indication of window associated information of the first transmission window, wherein the adjustment indication is used to indicate to adjust associate information of the first transmission window, or to indicate to open or close of the first transmission window.

**54.** The apparatus of any one of claims 51 to 53, wherein a signaling carrying the window adjustment indication information is any one of the following:

a physical layer signaling; or
a medium access control, MAC, layer signaling.

**55.** The apparatus of claim 49 or 50, further comprising:
an obtaining module, used for obtaining a target value of service transmission associated information, wherein the service transmission associated information is transmission associated information of the first service.

**56.** The apparatus of claim 55, wherein the determining module is further used for:

determining target window associated information based on the target value; and
determining a second transmission window based on the target window associated information.

**57.** The apparatus of claim 55, wherein the service transmission associated information comprises first service transmission associated information and/or second service transmission associated information, and the obtaining module is further used for:

receiving a target value of the first service transmission associated information sent from a network device, wherein the target value of the first service transmission associated information is the target value of the service transmission associated information; or
obtaining the target value of the service transmission associated information based on the second service transmission associated information.

**58.** The apparatus of claim 57, further comprising:
a sending module, used for sending the target value of the service transmission associated information obtained based on the second service transmission associated information to a network device, wherein the target value is used for the network device to determine window adjustment indication information.

**59.** The apparatus of claim 57, wherein the first service transmission associated information and/or the second service transmission associated information comprises one or more of the following:

a delay jitter of data packet arrival;
a transmission delay of data packet;
a remaining delay of data packet delay budget, PDB;
an available transmission delay of data packet;
packet loss associated information of data packet due to existence of transmission delay;
a time interval between a data packet arrival position and a start position of the first transmission window;
a time interval between a data packet arrival position and an end position of the first transmission window;

channel state information of data packet transmission; or

transmission rate associated information of data packet.

60. The apparatus of claim 59, wherein the delay jitter of data packet arrival is obtained through a first calculation model, and the first calculation model is:

$$T\_t = T\_arriv - T\_init + T\_offset,$$

wherein $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,

wherein the target layer comprises one or more of the following:

a server data adaptation protocol, SDAP, layer;
a packet data convergence protocol, PDCP, layer;
a radio link control, RLC, layer;
a medium access control, MAC, layer; or
a physical layer.

61. The apparatus of any one of claims 52, 53 or 56, wherein the window associated information and/or the target window associated information comprises one or more of the following:

a start position of window;
an end position of window;
a window size;
a window period and a window offset;
a window period;
a window offset;
a number of windows in a window period;
a number of windows within a specific time; or
a number of windows.

62. The apparatus of any one of claims 55 to 58, wherein the target value comprises any one of the following:

a statistical value corresponding to a target statistical time window; or
a statistical value corresponding to a target sliding time window.

63. An apparatus for service transmission, comprising:
a sending module, used for sending first information to a terminal device, wherein the first information comprises a data packet of the first service and/or a data packet for indicating the terminal device to receive the first service.

64. The apparatus of claim 15, wherein the sending module is further used for:
sending window adjustment indication information to the terminal device, wherein the window adjustment indication information is used to indicate the terminal device to determine a second transmission window and receive the first information within the second transmission window.

65. The apparatus of claim 63, further comprising:
an obtaining module, used for obtaining a target value of service transmission associated information, wherein the service transmission associated information is transmission associated information of the first service.

66. The apparatus of claim 65, wherein the service transmission associated information comprises first service transmission associated information and/or second service transmission associated information, and the obtaining module is further used for:

obtaining a target value of the first service transmission associated information based on the first service transmission associated information, wherein the target value of the first service transmission associated information is the target value of the service transmission associated information; or

receiving the target value of the service transmission associated information obtained based on the second service transmission associated information sent from the terminal device.

**67.** The apparatus of claim 66, wherein the sending module is further used for:
sending the target value of the first service transmission associated information to the terminal device.

**68.** The apparatus of claim 65, wherein the target value is obtained based on any one of the following ways:

a processing way pre-configured by a protocol; or
a processing way corresponding to the first service.

**69.** The apparatus of claim 68, wherein the target value comprises any one of the following:

a statistical value corresponding to a target statistical time window; or
a statistical value corresponding to a target sliding time window.

**70.** The apparatus of claim 69, wherein the target statistical time window, associated information of the target statistical time window, and the target sliding time window are obtained based on one or more of the following ways:

pre-configured by a protocol; or
indicated by the terminal device.

**71.** The apparatus of claim 66, wherein the first service transmission associated information and/or the second service transmission associated information comprises at least one of the following:

a delay jitter of data packet arrival;
a transmission delay of data packet;
a remaining delay of data packet delay budget, PDB;
an available transmission delay of data packet;
packet loss associated information of data packet due to existence of transmission delay;
a time interval between a data packet arrival position and a start position of the first transmission window;
a time interval between a data packet arrival position and an end position of the first transmission window;
channel state information of data packet transmission; or
transmission rate associated information of data packet.

**72.** The apparatus of claim 71, wherein the delay jitter of data packet arrival is obtained through a first calculation model, and the first calculation model is:

$$T\_t = T\_arriv - T\_init + T\_offset,$$

wherein $T\_t$ represents the delay jitter of data packet arrival, $T\_init$ represents a generation time of a first target data packet, $T\_arriv$ represents a time when a second target data packet arrives at a target layer in the network device, and $T\_offset$ represents an adjustment parameter,
wherein the target layer comprises one or more of the following:

a server data adaptation protocol, SDAP, layer;
a packet data convergence protocol, PDCP, layer;
a radio link control, RLC, layer;
a medium access control, MAC, layer; or
a physical layer.

**73.** A non-transitory computer readable storage medium storing a computer program, and the computer program is used to cause a processor to perform the method of any of claims 1 to 14, or perform the method of any of claims 15 to 24.

UE in off duration does not receive PDCCH

◄On duration►◄————Off duration————►

◄————————DRX cycle————————►

FIG. 1

Data source

Network device

Terminal device

FIG. 2

| Determining a first transmission window corresponding to a first service | ~ 301 |

↓

| Receiving first information in the first transmission window, where the first information includes a data packet of the first service and/or a data packet for indicating the terminal device to receive the first service | ~ 302 |

FIG. 3

FIG. 4

Sending first information to a terminal device, where
the first information comprises a data packet of the
first service and/or a data packet for indicating the
terminal device to receive the first service

~ 501

FIG. 5

| Network device | | Terminal device |
|---|---|---|

601: Send first indication information

602: Determine a first transmission window
based on the first indication information, and
receive the first information within the first
transmission window

603: Send window adjustment indication
information

604: Determine a second transmission window
based on the first transmission window and the
window adjustment indication information, or
based on the window adjustment indication
information, and receive the first information
within the second transmission window

FIG. 6

| Network device | | Terminal device |
|---|---|---|

701: Send first indication information

702: Determine a first transmission window based on the first indication information, and receive first information within the first transmission window

703: Send a target value of first service transmission associated information

704: Determine whether to adjust a transmission window based on the target value of the first service transmission associated information

705: In case of determining to adjust a window, determine a second transmission window based on the target value, and receive the first information within the second transmission window

FIG. 7

Apparatus for service transmission 80

| Determining module | 810 |
|---|---|
| Receiving module | 820 |
| Obtaining module | 830 |
| Sending module | 840 |

FIG. 8

Apparatus for service
transmission 90

Sending
module — 910

Obtaining
module — 920

Receiving
module — 930

FIG. 9

Terminal device

1010
Processor

1030
Memory

Communication bus

1040

1020
Communication
interface

FIG. 10

Network device

1110
Processor

1130
Memory

Communication bus

1140

1120
Communication
interface

FIG. 11

## INTERNATIONAL SEARCH REPORT

| International application No. |
| --- |
| **PCT/CN2023/096644** |

| A. | CLASSIFICATION OF SUBJECT MATTER |
| --- | --- |

H04W 72/04(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04L H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; CJFD; IEEE; 3GPP; CNKI: 业务, 传输, 窗口, 时间, 时段, 指示, 数据, 接收, 发送, 终端, 网络, service, transmission, window, time, period, indication, data, send, reception, receive, UE, network

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113242577 A (GUANGDONG OPPO MOBILE COMMUNICATIONS CO., LTD.) 10 August 2021 (2021-08-10) description, paragraphs [0002]-[0397] | 1-73 |
| A | CN 107006030 A (QUALCOMM INC.) 01 August 2017 (2017-08-01) entire document | 1-73 |
| A | CN 110366258 A (HUAWEI TECHNOLOGIES CO., LTD.) 22 October 2019 (2019-10-22) entire document | 1-73 |
| A | US 2017085493 A1 (SENARATH NIMAL GAMINI; VRZIC SOPHIE; RAO JAYA; ZHANG HANG; HUAWEI TECHNOLOGIES CO., LTD.) 23 March 2017 (2017-03-23) entire document | 1-73 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 August 2023** | **23 August 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/096644**

| Patent document cited in search report | | | Publication date (day/month/year) | Patent family member(s) | | | Publication date (day/month/year) |
|---|---|---|---|---|---|---|---|
| CN | 113242577 | A | 10 August 2021 | WO | 2020124514 | A1 | 25 June 2020 |
| | | | | EP | 3852453 | A1 | 21 July 2021 |
| | | | | KR | 20210108368 | A | 02 September 2021 |
| | | | | IN | 202117016115 | A | 15 October 2021 |
| | | | | AU | 2018454076 | A1 | 13 May 2021 |
| | | | | JP | 2022513742 | W | 09 February 2022 |
| CN | 107006030 | A | 01 August 2017 | TW | 201633830 | A | 16 September 2016 |
| | | | | WO | 2016094441 | A2 | 16 June 2016 |
| | | | | WO | 2016094441 | A3 | 20 October 2016 |
| | | | | US | 2016174196 | A1 | 16 June 2016 |
| | | | | US | 9949236 | B2 | 17 April 2018 |
| | | | | JP | 2018502497 | A | 25 January 2018 |
| | | | | JP | 6419971 | B2 | 07 November 2018 |
| | | | | EP | 3231243 | A2 | 18 October 2017 |
| CN | 110366258 | A | 22 October 2019 | WO | 2019196810 | A1 | 17 October 2019 |
| US | 2017085493 | A1 | 23 March 2017 | WO | 2017050252 | A1 | 30 March 2017 |
| | | | | EP | 3342138 | A1 | 04 July 2018 |
| | | | | EP | 3342138 | A4 | 22 August 2018 |
| | | | | EP | 3342138 | B1 | 27 May 2020 |
| | | | | US | 10862818 | B2 | 08 December 2020 |

Form PCT/ISA/210 (patent family annex) (July 2022)

**REFERENCES CITED IN THE DESCRIPTION**

**Patent documents cited in the description**

- CN 202211216025